# EUROPEAN PATENT SPECIFICATION

(11) **EP 3 879 957 B1**
(45) Date of publication and mention of the grant of the patent: **10.06.2026**
(21) Application number: 19805040.3
(22) Date of filing: 28.10.2019
(51) Int. Cl.: A01D 41/14, A01D 75/18

(54) **HEADER WITH MODULAR RIGID FRAME**
ERNTEVORSATZ MIT MODULAREM STEIFEM RAHMEN
COLLECTEUR À CADRE RIGIDE MODULAIRE

(30) Priority: 16.11.2018 US 201862768158 P
(43) Date of publication of application: 22.09.2021
(73) Proprietor: CNH Industrial Belgium NV, 8210 Zedelgem (BE)
(72) Inventor: KEMMERER, Benjamin David, Hamburg, Pennsylvania 19526 (US); NOLL, Blaine Robert, Fleetwood, Pennsylvania 19522 (US); FARLEY, Herbert Max, Elizabethtown, Pennsylvania 17022 (US); SANTOLERI, Nicholas, Lancaster, Pennsylvania 17602 (US)
(74) Representative: CNH Industrial IP Department
(86) International application number: PCT/US2019/058293
(87) International publication number: WO 2020/101871

(56) References cited:
- EP-A1- 3 593 617
- WO-A1-97/24919
- BE-A3- 1 010 104
- US-B1- 7 992 372
- US-B2- 7 614 206

## Description

### BACKGROUND

The disclosure relates generally to a header for use with combine harvesters. In particular, the header includes a modular rigid frame.

An agricultural combine is a machine used to harvest a variety of crops from a field. Typically, the agricultural combine is coupled to a header that cuts the crop. Headers (e.g., draper headers) are becoming wider and wider. For example, current headers are greater than 7.62 m (25 feet) and may approach 18.29 m (60 feet) in the future. At these widths, a single piece welded frame creates many issues. For example, building wider headers requires larger spaces for both manufacturing, painting, and shipping. A wider frame may experience tolerance issues due to weld distortion. The largest heads may have low production volumes. In addition, any damage to the header may result in total loss of the header. Therefore, there is a need for a header that is less cumbersome.
BE 1010104 A3 discloses a modular header with a central part mounted to the harvester. The central part has connecting flanges to which side parts having different widths can be connected to obtain harvester headers of various widths.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the disclosure. Indeed, the disclosure may encompass a variety of forms that may be similar to or different from the embodiments set forth below.

According to the invention as set out in claim 1, a header of an agricultural harvester is provided. The header includes a rigid modular frame. The rigid modular frame includes a center section, a first outer section, and a second outer section. The first and second outer sections flank the center section and are rigidly coupled to the center section.

In another embodiment, an agricultural harvester is provided. The agricultural harvester includes a header. The header includes a rigid modular frame. The rigid modular frame includes a center section, a first outer section, and a second outer section. The first and second outer sections flank the center section and are rigidly coupled to the center section.

In a further embodiment, a draper header of an agricultural harvester is provided. The draper header includes a rigid modular frame. The rigid modular frame includes a center section. The rigid modular frame also includes a first outer section rigidly coupled to a bottom portion of the center section via a first bolted joint and coupled to a top portion of the center section via a first adjustable mechanical joint. The rigid modular frame further includes a second outer section rigidly coupled to the bottom portion of the center section via a second bolted joint and coupled to the top portion of the center section via a second adjustable mechanical joint. The first and second adjustable mechanical joints are configured to counteract distortion between the center section and the first and second outer sections, respectively, and the first and second outer sections flank the center section.

### DRAWINGS

These and other features, aspects, and advantages of the present invention will become better understood when the following detailed description is read with reference to the accompanying drawings in which like characters represent like parts throughout the drawings, wherein:
FIG. 1 is a side view of an embodiment of a harvester having a header, in accordance with an aspect of the present disclosure;
FIG. 2 is a top perspective view of an embodiment of a header that may be coupled to a feederhouse of the harvester of FIG. 1, in accordance with an aspect of the present disclosure;
FIG. 3 is a rear view of an embodiment of a modular frame for the header of FIG. 2, in accordance with an aspect of the present disclosure;
FIG. 4 is a rear view of a right side of the modular frame of FIG. 3 having a portion of a center section coupled to a portion of an outer section;
FIG. 5 is a rear view of a left side of the modular frame of FIG. 3 having a portion of the center section coupled to a portion of an outer section;
FIG. 6 is a schematic top view illustrating an outer section of the modular frame of FIG. 3 moving rearward in response to a force; and
FIG. 7 is a schematic top cross-sectional view illustrating a break away feature breaking in response to a force.

### DETAILED DESCRIPTION

The invention refers to a header (e.g., draper header) for a harvester. The header includes a rigid modular frame made of a center section and flanking outer sections. Each outer section is coupled to the center section via a single rigid connection (e.g., via a bolted joint) and an adjustable mechanical joint. The adjustable mechanical joint is adjusted (e.g., tension adjusted) prior to tightening of fasteners at the bolted joint to counteract any distortions (e.g., natural or weld distortions) within the frame. In certain embodiments, the fasteners at the bolted joints may include break away features that enable an outer section of the frame to swing rearward or forward in response to a very high impact force on an outer edge of the outer section. Utilizing a common center section may increase the volume of the part of the frame that is most complex to manufacture. In addition, the modular frames may utilize less space for weld assembly and painting. Further, smaller frame sizes may result in less weld distortion. Even further, the components of the modular frame may be broken down to make shipping easier. Still further, single sections of the modular frame may be replaced if damage occurs.

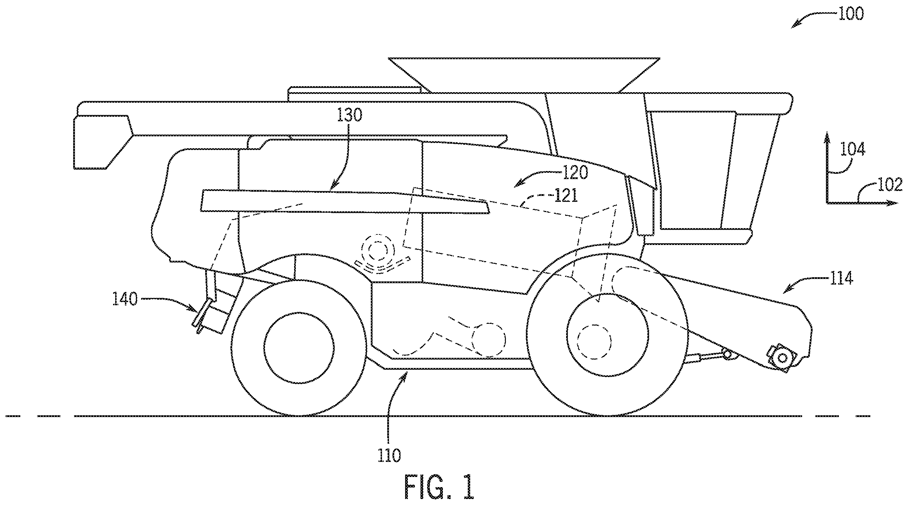

With the foregoing in mind, the present embodiments relating to a header may be utilized within any suitable harvesting system. For example, FIG. 1 is a side view of an embodiment of a harvester 100 (e.g., agricultural harvester or combine harvester). To facilitate discussion, the harvester 100 and certain components of the harvester 100 may be described with reference to a longitudinal axis or direction 102 and a vertical axis or direction 104. The harvester 100 includes a header (e.g., draper header, not shown) that cuts crops and directs movement of the cut crops towards an inlet of a feederhouse 114 of the harvester 100 for further processing of the cut crops. The harvester 100 includes a longitudinally oriented crop processing system 120 that receives cut crops from the feederhouse 114. As an example, the crop processing system 120 includes a thresher 122 that conveys a flow of crops from the feederhouse 114 into the crop processing system 120. In some embodiments, the thresher 122 is a cylindrical threshing rotor that transports the crops in a helical flow path. In addition to transporting the crops, the thresher 122 may also separate certain desired crop material (e.g., grain) from the crops by loosening and separating the crop material from crop residue, such as husk and pods, into a cleaning system located beneath the thresher 122. The remaining crop residue may be transported from the thresher 122 to a crop residue handling system 130, which may hold the crop residue for further processing and/or remove the crop residue from the harvester 100 via a crop residue spreading system 140 positioned at the aft end of the harvester 100.

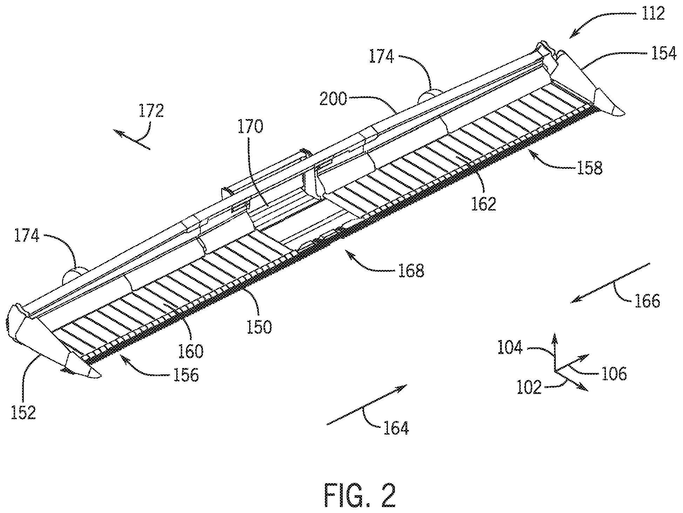

FIG. 2 is a top perspective view of an embodiment of a header 112 (e.g., draper header) that may be coupled to the feederhouse of the harvester. To facilitate discussion, the header 112 and certain components of the header 112 may be described with reference to a lateral axis or direction 106. It should be noted that not all components of the header 112 are shown (e.g., reel, infeed auger, etc.). The header 112 includes a frame 200 that may be removably coupled to the feederhouse. The header 112 also includes a cutter bar 150 that extends along the lateral axis 106 between a first header end 152 and a second header end 154 of the frame 200. When the harvester 100 is in operation, blades of the cutter bar 150 may come into contact with and cut a portion of crops. The portion of the crops that are cut may be dropped onto a first side draper deck 156 and a second side draper deck 158. The first side draper deck 156 includes a first side conveyor 160, and the second side draper deck 158 includes a second side conveyor 162. The first side draper deck 156 extends along the lateral axis 106 and moves crops generally in a direction 164. The second side draper deck 158 extends along the lateral axis 106 and moves crops generally in a direction 166.

An infeed draper deck 168 is disposed generally along a center of the header 112 and between the first side draper deck 156 and the second side draper deck 158. As illustrated, the infeed draper deck 168 extends along the longitudinal axis 102. The infeed draper deck 168 includes an infeed conveyor 170. As each of the first side draper deck 156 and the second side draper deck 158 receive the portion of the crops cut by the cutter bar 150, the first side draper deck 156 and the second side draper deck 158 move the portion of the crops toward the infeed draper deck 168 in the first direction 164 and the second direction 166, respectively. The infeed draper deck 168 moves the portion of the crops in a direction 172 toward the feederhouse and the crop processing system.

As illustrated, the header 112 includes wheels 174 that enable the harvester to drive the header 112 over certain surfaces (e.g., a field, hills, roads, and other uneven surfaces). As the header 112 traverses the surfaces, the cutter bar 150 may flex. For example, the cutter bar 150 may flex to generally match a contour of the surface. The ability of the cutter bar 150 to flex enables the harvester to precisely cut the crops at a specific location of the crops and to achieve higher crop yields while harvesting.

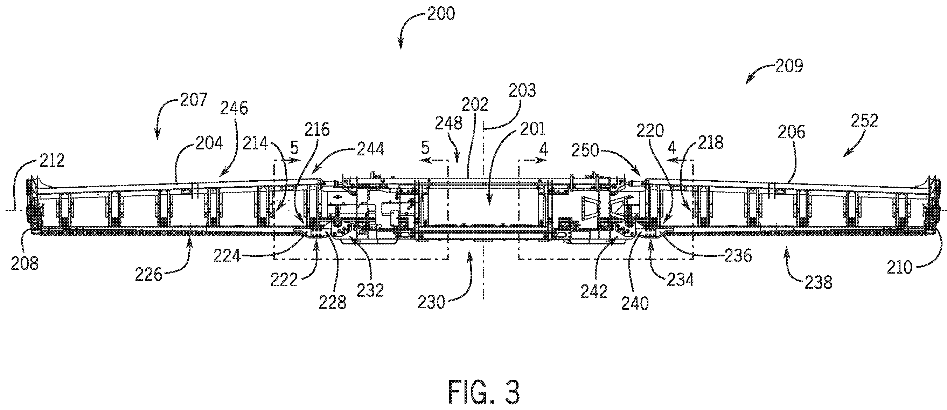

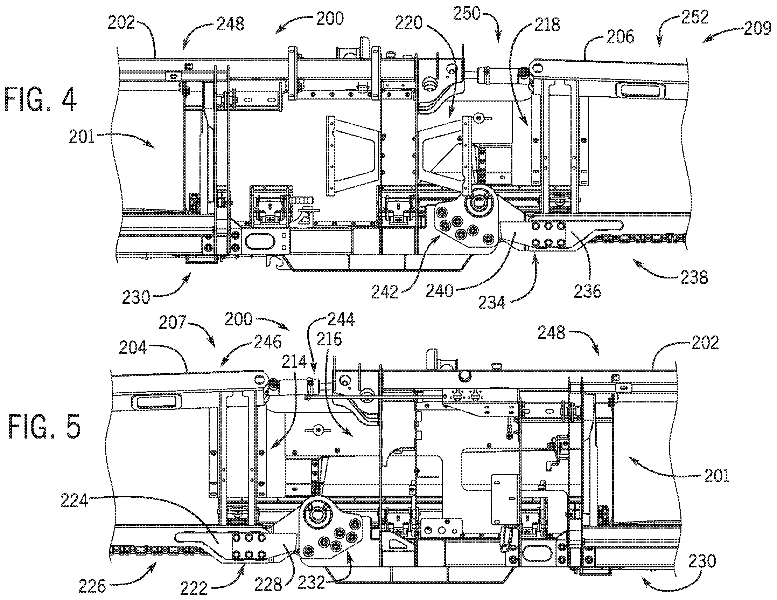

FIGS. 3-5 are different front views of an embodiment of the header 112 (e.g., draper header) having a modular frame 200. As depicted, the modular frame 200 includes separate components that are individually manufactured and then assembled together to form a single rigid modular frame or structure. These components include a center section 202 (including the inlet 201), a first outer section or wing 204, and a second outer section or wing 206 to form the modular frame 200 (e.g., segmented frame). The outer sections 204, 206 flank the center section 202 on each side (e.g., opposite sides 207, 209) of a centerline or plane 203 (e.g., bisecting frame 200 in half). The outer sections 204 and 206 coupled to the center section 202 form mirrored sections about the center line 203. In certain embodiments, one outer section 204, 206 may be longer than another (e.g., to accommodate unloading from combine grain tank).

As noted above, the center section 202 and the outer sections 204, 206 are individually manufactured. The center section 202 is a common section that can be coupled to different pairs of outer sections 204, 206 having different lengths to adjust an overall length of the frame 200 along a longitudinal axis 212. For example, the center section 202 may be coupled to a first pair of outer sections 204, 206, where each section 204, 206 has a same length. The same center section 202 may also be coupled to a second pair of outer sections 204, 206, where each outer section 204, 206 has a same length with the length of the second pair of outer sections 204, 206 being different from the length of the first pair of outer sections 204, 206.

The frame 200 includes a first longitudinal end 208 and a second longitudinal end 210 relative to the longitudinal axis 212 of the fame 200. The outer section 204 includes a longitudinal end 214 disposed adjacent (e.g., proximate) the center section 202 (e.g., longitudinal end 216 of the center section 202) and the longitudinal end 208 located distal from the center section 202. The outer section 206 includes a longitudinal end 218 disposed adjacent (e.g., proximate) the center section 202 (e.g., longitudinal end 220 of the center section 202) and the longitudinal end 210 located distal from the center section 202.

The outer section 204 is solely rigidly coupled to the center section 202 via a bolted joint 222. In particular, a flange 224 on a bottom portion 226 of the outer section 204 at end 214 is coupled to a flange 228 on a bottom portion 230 of the center section 202 via a first plurality of fasteners 232 (e.g., bolts, nuts, pins, etc.). The outer section 206 is solely rigidly coupled to the center section 202 via a bolted joint 234. In particular, a flange 236 on a bottom portion 238 of the outer section 206 at end 218 is coupled to a flange 240 on the bottom portion 230 of the center section 202 via a second plurality of fasteners 242 (e.g., bolts, nuts, pins, etc.). The rigid coupling of the outer sections 204, 206 to the center section 202 form the rigid modular frame 200. In particular, the components of the frame 200 (i.e., the outer sections 204, 206 and the center section 202) do not move with respect each other (e.g., rearward, forward, upward, and/or downward).

The outer section 204 is also coupled to the center section 202 via an adjustable mechanical joint 244. In particular, a top portion 246 of the outer section 204 at end 214 is coupled to a top portion 248 of the center section 202 at end 216 via the adjustable mechanical joint 244. The outer section 206 is also coupled to the center section 202 via an adjustable mechanical joint 250. In particular, a top portion 252 of the outer section 206 at end 218 is coupled to the top portion 248 of the center section 202 at end 220 via the adjustable mechanical joint 250. The adjustable mechanical joints 244, 250 are configured to be adjusted (e.g., tension adjusted) prior to tightening of the fasteners 232, 242 at the bolted joints 222, 234. The adjustable mechanical joints 244, 250 counteract the natural distortions and weld distortions in the center section 202 and the outer sections 204, 206 prior to the tightening of the fasteners 232, 242. In certain embodiments, the adjustable mechanical joints 244, 250 may include turnbuckles, stretching screws, or bottlescrews. In certain embodiments, the outer sections 204, 206 and the center section 202 may not include adjustable mechanical joints but may be rigidly coupled at the top.

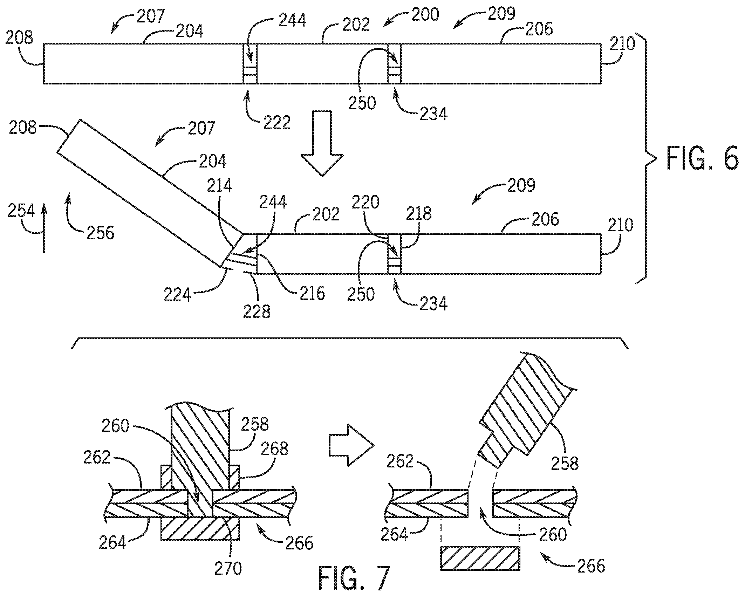

FIG. 6 is a schematic top view illustrating the outer section 204 of the modular frame 200 of FIG. 3 moving rearward in response to a force. In certain embodiments, the outer section 204 may move forward in response to the force. The top portion of FIG. 6 illustrates the modular frame 220 as described above in the absence of a predetermined force (e.g., very high impact force) acting on the frame 200. The bolted joints 222, 234 each include break away features. The breakaway features enable the outer sections 204, 206 to swing rearward or forward in the presence of an impact of a predetermined force on an outer end of the outer sections 204, 206. The breakaway features may include a shear bolt, shear nut, or shear pin that is configured when experiencing enough force (i.e., the predetermined force) to break or snap. When the breakaway features break on either the bolted joint 222 or 234, the respective flanges for the bolted joints 222, 234 are no longer coupled enabling the respective outer section 204 or 206 to swing rearward or forward relative to the center section 202. The bottom portion of FIG. 6 illustrates the effects of an impact of a predetermined force on the frame 200. An impact 254 on an outer end 256 of the outer section 204 meeting the predetermined force level causes the breakaway features of the bolted joint 222 to break so that the flanges 224 and 228 are no longer coupled. As a result, the outer section 204 swings rearward (as shown) or forward relative to the center section 202. Although the outer sections 204, 206 may experience damage in response to a very high impact force on an outer end, the breakaway features preserve the center section 202 from damage. If the outer section 204 or 206 is damaged, another outer section 204 or 206 may be coupled to the same center section 202. Thus, the entire header 112 does not need to be replaced.

FIG. 7 is a schematic top cross-sectional view illustrating a break away feature breaking in response to a force. A left portion of FIG. 7, illustrates a bolt 258 (e.g., shear bolt) disposed through an opening 260 of two flanges 262, 264 (e.g., flanges 224 and 228 or flanges 236 and 240) of a bolted joint 266 (e.g., bolted joint 222, 234). The bolt 258 is secured to the flanges 262, 264 via a nut 268. As depicted, the bolt 258 includes a groove 270. In response to a force that meets or exceeds a predetermined force the bolt 258 breaks so that the flanges 262, 264 are no longer secured to each other as illustrated in the right portion of FIG. 7. In certain embodiments, the nut 268 may be a shear nut that breaks in response to a force that meets or exceeds a predetermined force. In certain embodiments, a shear pin may be utilized as a fastener and may break in response to a force that meets or exceeds a predetermined force.

## Claims

1. A header (112) of an agricultural harvester (100), comprising:
a rigid modular frame (200), comprising:
a center section (202);
a first outer section (204); and
a second outer section (206), wherein the first and second outer sections (204, 206) flank the center section (202) and are rigidly coupled to the center section (202),
wherein a bottom portion (230) of the center section (202) is rigidly coupled respectively to respective bottom portions (226, 238) of the first and second outer sections (204, 206) via respective bolted joints (222, 234);
the header (112) being **characterized in that** a top portion (248) of the center section (202) is coupled respectively to respective top portions (246, 252) of the first and second outer sections (204, 206) via a respective adjustable mechanical joint (244, 250) configured to counteract distortion between the center section (202) and the first and second outer sections (204, 206) prior to tightening fasteners at the respective bolted joints (222, 234).

2. The header (112) of claim 1, wherein the header (112) comprises a draper header (112).

3. The header (112) of any of claims 1-2, wherein the center section (202) is configured to be coupled to a first pair of outer sections (204, 206), each outer section (204, 206) of the first pair of outer sections (204, 206) having a first length, and the center section (202) is configured to be coupled to a second pair of outer sections (204, 206), each outer section (204, 206) of the second pair of outer sections (204, 206) having a second length, and the first length and the second length are different.

4. The header (112) of any of claims 1-3, wherein each respective adjustable mechanical joint (244, 250) comprises a turnbuckle.

5. The header (112) of any of claims 1-4, wherein each respective bolted joint (222, 234) comprises a break away feature that enables an outer section (204, 206) coupled to the center section (202) via the respective bolted joint (222, 234) to swing rearward or forward relative to the center section (202) in response to a predetermined amount of force impacting an outer end of the outer section (204, 206).

6. The header (112) of any of claims 1-5, wherein the bottom portion (230) of the center section (202) is solely rigidly coupled respectively to the respective bottom portions (226, 238) of the first and second outer sections (204, 206) via the respective bolted joints (222, 234).

7. The header (112) of any of claims 1-6, wherein the first and second outer sections (240, 206) are mirror images of each other.

8. An agricultural harvester (100), **characterized in that** the agricultural harvester (100) comprises a header (112) as claimed in any of the claims 1-7.

## Patentansprüche

1. Vorsatz (112) einer landwirtschaftlichen Erntemaschine (100), umfassend:
ein starrer modularer Rahmen (200), umfassend:
einen mittleren Bereich (202);
einen ersten äußeren Bereich (204) und
einen zweiten äußeren Bereich (206), wobei der erste und zweite äußere Bereich (204, 206) den mittleren Bereich (202) flankieren und starr an den mittleren Bereich (202) gekoppelt sind,
wobei ein unterer Abschnitt (230) des mittleren Bereichs (202) starr über jeweilige Schraubverbindungen (222, 234) jeweils an jeweilige untere Abschnitte (226, 238) des ersten und zweiten äußeren Bereichs (204, 206) gekoppelt ist;
wobei der Vorsatz (112) **dadurch gekennzeichnet ist, dass** ein oberer Abschnitt (248) des mittleren Bereichs (202) jeweils mit jeweiligen oberen Abschnitten (246, 252) des ersten und zweiten äußeren Bereichs (204, 206) über eine jeweilige einstellbare mechanische Verbindung (244, 250) gekoppelt ist, die konfiguriert ist, um einer Verformung zwischen dem mittleren Bereich (202) und dem ersten und zweiten äußeren Bereich (204, 206) vor dem Anziehen von Befestigungselementen an den entsprechenden Schraubverbindungen (222, 234) entgegenzuwirken.

2. Vorsatz (112) nach Anspruch 1, wobei der Vorsatz (112) einen Draper-Vorsatz (112) umfasst.

3. Vorsatz (112) nach einem der Ansprüche 1 bis 2, wobei der mittlere Bereich (202) konfiguriert ist, um an ein erstes Paar von äußeren Bereichen (204, 206) gekoppelt zu werden, wobei jeder äußere Bereich (204, 206) des ersten Paars von äußeren Bereichen (204, 206) eine erste Länge aufweist und der mittlere Bereich (202) konfiguriert ist, um an ein zweites Paar von äußeren Bereichen (204, 206) gekoppelt zu werden, wobei jeder äußere Bereich (204, 206) des zweiten Paars von äußeren Bereichen (204, 206) eine zweite Länge aufweist und die erste Länge und die zweite Länge unterschiedlich sind.

4. Vorsatz (112) nach einem der Ansprüche 1 bis 3, wobei jede jeweilige einstellbare mechanische Verbindung (244, 250) eine Spannschraube umfasst.

5. Vorsatz (112) nach einem der Ansprüche 1 bis 4, wobei jede jeweilige Schraubverbindung (222, 234) ein Abbruchmerkmal umfasst, das es einem äußeren Bereich (204, 206), der über die jeweilige Schraubverbindung (222, 234) an den mittleren Bereich (202) gekoppelt ist, ermöglicht, relativ zu dem mittleren Bereich (202) als Reaktion auf eine vorbestimmte Kraftmenge, die auf ein äußeres Ende des äußeren Bereichs (204, 206) einwirkt, nach hinten oder nach vorn zu schwenken.

6. Vorsatz (112) nach einem der Ansprüche 1 bis 5, wobei der untere Abschnitt (230) des mittleren Bereichs (202) ausschließlich starr jeweils über die jeweiligen Schraubverbindungen (222, 234) an die jeweiligen unteren Abschnitte (226, 238) des ersten und zweiten äußeren Bereichs (204, 206) gekoppelt ist.

7. Vorsatz (112) nach einem der Ansprüche 1 bis 6, wobei der erste und zweite äußere Bereich (240, 206) Spiegelbilder voneinander sind.

8. Landwirtschaftliche Erntemaschine (100),
**dadurch gekennzeichnet, dass** die landwirtschaftliche Erntemaschine (100) einen Vorsatz (112) nach einem der Ansprüche 1 bis 7 umfasst.

## Revendications

1. Tête de coupe (112) d'une récolteuse agricole (100), comprenant :
un cadre modulaire rigide (200), comprenant :
une section centrale (202) ;
une première section externe (204) ; et
une seconde section externe (206), dans laquelle les première et seconde sections externes (204, 206) encadrent la section centrale (202) et sont accouplées de manière rigide à la section centrale (202),
dans laquelle une partie inférieure (230) de la section centrale (202) est accouplée de manière rigide respectivement aux parties inférieures (226, 238) respectives des première et seconde sections externes (204, 206) par l'intermédiaire de joints boulonnés (222, 234) respectifs ;
la tête de coupe (112) étant **caractérisée en ce qu'**une partie supérieure (248) de la section centrale (202) est accouplée respectivement aux parties supérieures (246, 252) respectives des première et seconde sections externes (204, 206) par l'intermédiaire d'un joint mécanique réglable (244, 250) respectif conçu pour contrebalancer la distorsion entre la section centrale (202) et les première et seconde sections externes (204, 206) avant le serrage de fixations au niveau des joints boulonnés (222, 234) respectifs.

2. Tête de coupe (112) selon la revendication 1, dans laquelle la tête de coupe (112) comprend une tête de coupe à tablier (112).

3. Tête de coupe (112) selon l'une quelconque des revendications 1 à 2, dans laquelle la section centrale (202) est conçue pour être accouplée à une première paire de sections externes (204, 206), chaque section externe (204, 206) de la première paire de sections externes (204, 206) ayant une première longueur, et la section centrale (202) est conçue pour être accouplée à une seconde paire de sections externes (204, 206), chaque section externe (204, 206) de la seconde paire de sections externes (204, 206) ayant une seconde longueur, et la première longueur et la seconde longueur sont différentes.

4. Tête de coupe (112) selon l'une quelconque des revendications 1 à 3, dans laquelle chaque joint mécanique réglable (244, 250) respectif comprend un tendeur.

5. Tête de coupe (112) selon l'une quelconque des revendications 1 à 4, dans laquelle chaque joint boulonné (222, 234) respectif comprend une caractéristique de rupture qui permet à une section externe (204, 206) accouplée à la section centrale (202) par l'intermédiaire du joint boulonné (222, 234) respectif de basculer vers l'arrière ou vers l'avant par rapport à la section centrale (202) en réponse à une quantité prédéterminée de force impactant une extrémité externe de la section externe (204, 206).

6. Tête de coupe (112) selon l'une quelconque des revendications 1 à 5, dans laquelle la partie inférieure (230) de la section centrale (202) est uniquement accouplée de manière rigide respectivement aux parties inférieures (226, 238) respectives des première et seconde sections externes (204, 206) par l'intermédiaire des joints boulonnés (222, 234) respectifs.

7. Tête de coupe (112) selon l'une quelconque des revendications 1 à 6, dans laquelle les première et seconde sections externes (240, 206) sont des images miroir l'une de l'autre.

8. Récolteuse agricole (100), **caractérisée en ce que** la récolteuse agricole (100) comprend une tête de coupe (112) selon l'une quelconque des revendications 1 à 7.
